# EUROPEAN PATENT APPLICATION

(11) **EP 4 431 929 A1**
(43) Date of publication of application: **18.09.2024**
(21) Application number: 22906905.9
(22) Date of filing: 12.07.2022
(51) Int. Cl.: G01N 27/00, G01N 27/04

(54) **ESTIMATION DEVICE, ESTIMATION METHOD, ESTIMATION PROGRAM, AND LEARNING MODEL GENERATION DEVICE**

(30) Priority: 14.12.2021 JP 2021202865
(71) Applicant: BRIDGESTONE CORPORATION, Chuo-ku Tokyo 104-8340 (JP)
(72) Inventor: KITANO, Hajime, Tokyo 104-8340 (JP); WAKAO, Yasumichi, Tokyo 104-8340 (JP); SHINOHARA, Toshimitsu, Tokyo 104-8340 (JP); ONIKI, Yoshihiko, Tokyo 104-8340 (JP); FUJISAWA, Yusuke, Tokyo 104-8340 (JP)
(74) Representative: Marks & Clerk LLP
(86) International application number: PCT/JP2022/027487
(87) International publication number: WO 2023/112368

(57) **Abstract**

An estimating device, including: a detecting section detecting electrical characteristics between a plurality of predetermined detection points at a flexible material, which is electrically conductive and which has electrical characteristics that vary in accordance with deformation, of a target object that has the flexible material; and an estimating section that inputs time-series electrical characteristics, which were detected by the detecting section, of an object of estimation to a learning model that is trained by using, as learning data, time-series electrical characteristics that vary in accordance with deformation of the flexible material, and deteriorated state information expressing a deteriorated state relating to deformation of the flexible material, such that the time-series electrical characteristics are inputs of the learning model and the learning model outputs the deteriorated state information, and the estimating section estimates deteriorated state information expressing a deteriorated state corresponding to inputted time-series electrical characteristics.

## Description

### Technical Field

The present disclosure relates to an estimating device, an estimating method, an estimating program, and a learning model generating device.

### Background Art

Conventionally, changes in shape arising at an object are detected, and the state of a person or a thing that imparts deformation to the object is estimated by using the results of detection. In an aspect in which changes in shape arising at an object are detected, it is difficult to detect deformation of the object without obstructing the deformation. Further, because it is difficult to use strain sensors, which are used in detecting deformation of rigid bodies made of metal or the like, in products, a special detecting device is needed in order to detect deformation of an object. For example, there is known a technique in which displacement and vibrations of an object are measured by using a camera, images of the deformation are acquired, and the deformation amount is extracted therefrom (see, for example, International Publication No. 2017/029905). Further, techniques relating to flexible touch sensors that estimate the amount of deformation from the amount of transmitted light also are known (see, for example, Japanese Patent Application Laid-Open (JP-A) No. 2013-101096).

### SUMMARY OF INVENTION

### Technical Problem

However, in an aspect in which changes in shape that arise at a target object, which is an object or the like, are detected, if the deformation amount such as the displacement or the like of the target object is detected by using a camera and an image analysis method, the system that includes the camera and the image analysis and the like becomes a large-scale system, which leads to an increase in the size of the device and therefore is not preferable. Further, on the other hand, at target objects that are objects and are formed of a flexible material that is flexible and at which deformation and post-deformation restoration are possible, the flexibility / repulsion force / restoring force deteriorate due to changes over time and the like. However, the evaluation of flexibility depends on the subjectivity of the inspector that is due to the feel, such as the softness and the hardness and the like, at the time when the target object is deformed, and is insufficient for identifying the flexibility of a target object. Accordingly, the time of identifying a deteriorated state in which, for example, the softness of the target object becomes harder than the initial softness and the flexibility decreases due to changes over time or the like, is unclear. Accordingly, there is room for improvement in identifying the deteriorated state of a target object.

An object of the present disclosure is to provide an estimating device, an estimating method, an estimating program, and a learning model generating device that can estimate the deteriorated state of a target object that has a flexible material that is electrically-conductive, by using electrical characteristics of the target object and without using a special detecting device.

### Solution to Problem

An estimating device relating to a technique of the present disclosure comprises: a detecting section detecting electrical characteristics between a plurality of predetermined detection points at a flexible material, which is electrically conductive and which has electrical characteristics that vary in accordance with deformation, of a target object that has the flexible material; and an estimating section that inputs time-series electrical characteristics, which were detected by the detecting section, of an object of estimation to a learning model that is trained by using, as learning data, time-series electrical characteristics that vary in accordance with deformation of the flexible material, and deteriorated state information expressing a deteriorated state relating to deformation of the flexible material, such that the time-series electrical characteristics are inputs of the learning model and the learning model outputs the deteriorated state information, and the estimating section estimates deteriorated state information expressing a deteriorated state corresponding to inputted time-series electrical characteristics.

### BRIEF DESCRIPTION OF DRAWINGS

Fig. 1 is a drawing illustrating the structure of an estimating device relating to an embodiment.
Fig. 2 is a drawing illustrating arrangements of an electrically-conductive urethane relating to the embodiment.
Fig. 3 is a drawing illustrating the schematic structure of a learning model generating device relating to the embodiment.
Fig. 4 is a drawing illustrating functional structures of a learning processing section relating to the embodiment.
Fig. 5 is a drawing illustrating other functional structures of the learning processing section relating to the embodiment.
Fig. 6 is a drawing illustrating electrical structures of the estimating device relating to the embodiment.
Fig. 7 is a flowchart illustrating the flow of estimating processing relating to the embodiment.
Fig. 8 is a drawing illustrating an example of the structure of a deteriorated state estimating device relating to the embodiment.
Fig. 9 is a drawing illustrating a measuring device that measures a physical amount of a target object relating to the embodiment.
Fig. 10 is a schematic drawing illustrating an example of results of carrying out a durability test on the target object relating to the embodiment.
Fig. 11 is a drawing illustrating an example of electrical characteristics of the target object relating to the embodiment.
Fig. 12 is a schematic drawing in which the electrical characteristics of the target object relating to the embodiment are perceived from the standpoint of changes in electrical resistance values.
Fig. 13 is a schematic drawing illustrating frequency characteristics (power spectra) in the electrical characteristics of the target object relating to the embodiment.
Fig. 14 is a drawing illustrating an example of the flow of learning processing relating to the embodiment.
Fig. 15 is a flowchart illustrating an example of the flow of processing for estimating a deteriorated state of a target object relating to the embodiment.
Fig. 16 is a drawing illustrating a modified example of a deteriorated state estimating section relating to the embodiment.

### DESCRIPTION OF EMBODIMENTS

Embodiments that realize the technique of the present disclosure are described in detail hereinafter with reference to the drawings. Note that structural elements and processings whose operations and functions have the same workings are denoted by the same reference numerals throughout all of the drawings, and repeat description may be omitted as appropriate. Further, the present disclosure is not limited in any way to the following embodiments, and can be implemented by appropriate changes being made thereto within the scope of the object of the present disclosure.

Note that a figure in the present disclosure is a concept including at least one of a human body and an object that can apply a stimulus by a physical amount to a target object. In the following explanation, description will be given by collectively calling the concept, which includes humans and things, a figure without differentiating between at least one of a human body and an object. Namely, respective human bodies and objects themselves, and combined structures in which human bodies and objects are combined, are collectively called figures.

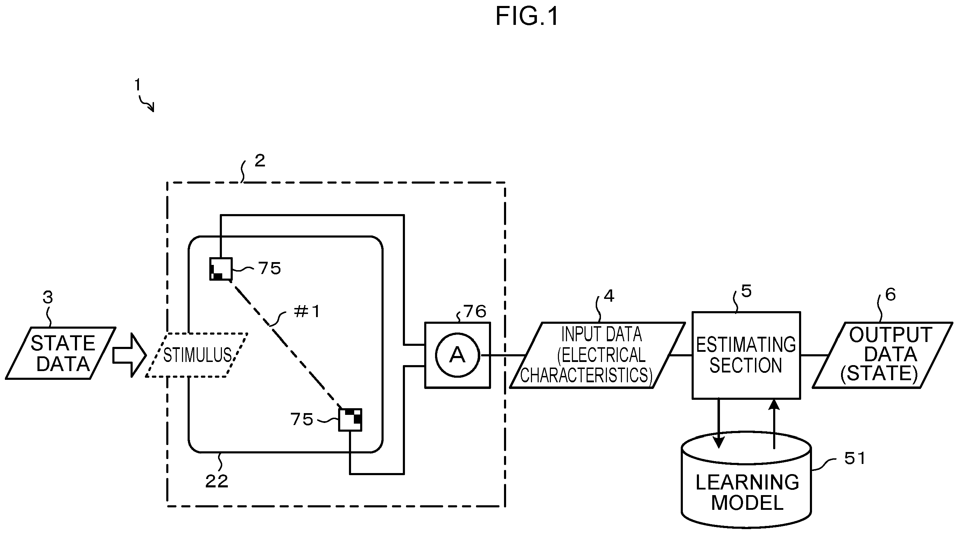

First, a flexible material, which applies the technique of the present disclosure and to which electrical conductivity is imparted, and state estimating processing that, by using the flexible material, estimates a state of an applying side with respect to the flexible material, are described with reference to Fig. 1 through Fig. 7.

### <Flexible Material>

The "flexible material" in the present disclosure is a concept that includes materials at which at least a portion thereof can deform such as bend or the like, and includes flexible elastic bodies such as rubber materials or the like, structures having a skeleton that is least one of fiber-like and mesh-like, and structures in whose interior plural, minute air bubbles are scattered. Polymer materials such as urethane and the like are examples of these structures. Further, in the present disclosure, a flexible material to which electrical conductivity is imparted is used. A "flexible material to which electrical conductivity is imparted" is a concept including materials that are electrically conductive, and includes materials in which an electrically-conductive material has been applied to a flexible material in order to impart electrical conductivity thereto, and materials in which a flexible material is electrically conductive. Polymer materials such as urethane materials and the like are suitable as flexible materials to which electrical conductivity is imparted. In the following explanation, description is given by calling a member, which is formed by compounding or infiltrating (also called impregnating) or the like an electrically-conductive material into all of or some of a urethane material, an "electrically-conductive urethane" as an example of the flexible material to which electrical conductivity is imparted. The electrically-conductive urethane can be formed by any method among compounding and infiltrating (impregnating) an electrically-conductive material, and can be formed by compounding or infiltrating (impregnating) an electrically-conductive material, or can be formed by combining the compounding and the infiltrating (impregnating) of an electrically-conductive material. For example, in a case in which the electrical conductivity of an electrically-conductive urethane formed by infiltration (impregnation) is higher than that of an electrically-conductive urethane formed by compounding, it is preferable to form the electrically-conductive urethane by infiltration (impregnation).

The electrically-conductive urethane has the feature that the electrical characteristics thereof vary in accordance with a physical amount applied thereto. A stimulus value in accordance with a pressure value that expresses a stimulus (hereinafter called pressure stimulus) that is due to pressure that deforms the structure such as bending or the like, is an example of the physical amount that gives rise to the feature of the electrical characteristics varying. Note that pressure stimuli include the application of pressure in accordance with the distribution of pressure that is applied to a predetermined region and pressure of a predetermined range. Further, other examples of the physical amount are stimulus values such as the percentage of contained water, or the moisture content that expresses a stimulus (hereinafter called material stimulus) that changes (alters) the properties of the material due to the application of moisture or the like, and the like. The electrical characteristics of the electrically-conductive urethane vary in accordance with the physical amount that is applied. Electrical resistance value is an example of a physical amount that expresses the electrical characteristics. Further, a voltage value and a current value are other examples.

Due to electrical conductivity being imparted to a flexible material that has a predetermined volume, electrical characteristics corresponding to the applied physical amount (i.e., changes in the electrical resistance values) appear at the electrically-conductive urethane, and the electrical resistance values can be understood as being the volume resistance values of the electrically-conductive urethane. In the electrically-conductive urethane, the electrical paths cooperate in a complex manner, and, for example extend/contract or expand/contract in accordance with deformation. Further, there are also cases in which the behavior of the electrical paths being temporarily cut-off, and the behavior of connection that is different than that previously arising, are exhibited. Accordingly, the electrically-conductive urethane exhibits the behavior of having electrical characteristics that differ due to deformation or alteration that corresponds to the magnitude or the distribution of a stimulus (a pressure stimulus or a material stimulus) that is in accordance with an applied physical amount, at positions that are a predetermined distance apart from one another (e.g., positions of detection points where electrodes are disposed). Therefore, the electrical characteristics vary in accordance with the magnitude or the distribution of the stimulus that is in accordance with the physical amount applied to the electrically-conductive urethane.

Note that, by using the electrically-conductive urethane, there is no need to provide detection points such as electrodes or the like at places that are targets of deformation and alteration. It suffices to provide detection points such as electrodes or the like at at least two arbitrary places that sandwich therebetween a place where a stimulus that is in accordance with a physical amount is applied to the electrically-conductive urethane (Fig. 1 for example).

A number of detection points that is greater than two detection points may be used in order to improve the accuracy of detecting the electrical characteristics of the electrically-conductive urethane. Further, an electrically-conductive urethane 22 illustrated in Fig. 1 may be made to be one electrically-conductive urethane piece, and the electrically-conductive urethane of the present disclosure may be formed by an electrically-conductive urethane group formed by plural electrically-conductive urethane pieces being arranged. In this case, the electrical characteristics may be detected at each of the plural electrically-conductive urethane pieces, or the electrical characteristics of plural electrically-conductive urethane pieces may be detected collectively. In a case of detecting the electrical characteristics at each of the plural electrically-conductive urethane pieces, the electrical characteristics such as the electrical resistance values or the like can be detected per placement region (e.g., detection sets #1 ~ #n). Further, as another example, the detection range on the electrically-conductive urethane 22 may be divided, and a detection point may be provided in each of the divisional detection ranges, and the electrical characteristics may be detected per detection range.

### <Estimating Device>

An example of an estimating device, which utilizes the electrically-conductive urethane and estimates the state of an applying side with respect to the electrically-conductive urethane, is described next.

An example of the structure of an estimating device 1, which can execute estimating processing that estimates the state of an applying side, is illustrated in Fig. 1. The estimating device 1 has an estimating section 5, and is connected to a target object 2 such that the electrical characteristics at the electrically-conductive urethane 22 are inputted to the estimating device 1. At the estimating device 1, the state of an applying side, with respect to the electrically-conductive urethane 22 that includes the target object 2, is estimated. The estimating device 1 can be realized by a computer that is provided with a CPU serving as an executing device that executes processings described later.

Deformation and alteration of the above-described electrically-conductive urethane arise due to a physical amount that is applied in time-series to the electrically-conductive urethane. This physical amount that is applied in time series depends on the state of the applying side. Accordingly, the electrical characteristics of the electrically-conductive urethane that vary in time series correspond to the state of the applying side of the physical amount that is applied to the electrically-conductive urethane. For example, in a case in which a pressure stimulus that deforms the electrically-conductive urethane or a material stimulus that alters the electrically-conductive urethane is applied, the electrical characteristics of the electrically-conductive urethane that vary in time series correspond to the state of the applying side, which expresses the position, the distribution and the magnitude of the pressure stimulus. Accordingly, the state of the applying side with respect to the electrically-conductive urethane can be estimated from the electrical characteristics of the electrically-conductive urethane that vary in time series.

At the estimating device 1, the state of an unknown applying side is estimated and outputted by an estimating processing that is described later, by using a learning model 51 that has been trained. Due thereto, the state of the applying side with respect to the target object 2 can be identified without using a special device or a large device and without directly measuring deformation and alteration of the electrically-conductive urethane 22 that is included in the target object. The learning model 51 is trained by using, as the inputs thereof, the state of the applying side with respect to the target object 2, and electrical characteristics of the target object 2 (i.e., electrical characteristics such as electrical resistance values or the like of the electrically-conductive urethane 22 disposed at the target object 2). The training of the learning model 51 is described later.

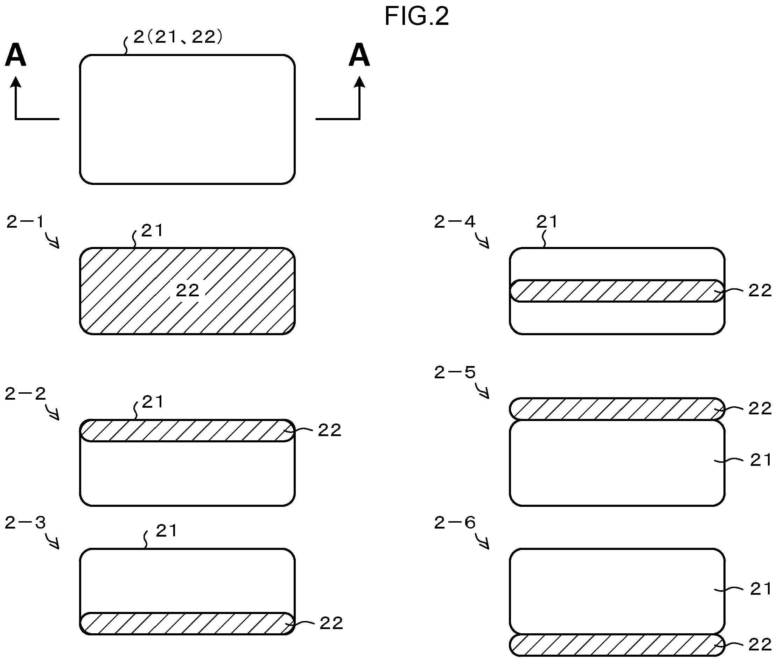

Note that the target object 2 can be structured by placing the electrically-conductive urethane 22 at a member 21 that is flexible (Fig. 2). The target object 2, which is structured by the member 21 at which the electrically-conductive urethane 22 is disposed, includes an electrical characteristic detecting section 76. It suffices for the electrically-conductive urethane 22 to be disposed at at least a portion of the member 21, and the electrically-conductive urethane 22 may be disposed at the interior thereof or may be disposed at the exterior thereof. Further, it suffices for the electrically-conductive urethane to be disposed such that the state of the applying side with respect to the electrically-conductive urethane can be estimated, and, for example, it suffices for the electrically-conductive urethane to be disposed such that it can be contacted by a figure, directly or indirectly or both.

Fig. 2 illustrates examples of arranging the electrically-conductive urethane 22 at the target object 2. As illustrated by target object cross-section 2-1 that is the A-A cross-section of the target object 2, the electrically-conductive urethane 22 may be formed so as to fill the entire interior of the member 21. Further, as illustrated by target object cross-section 2-2, the electrically-conductive urethane 22 may be formed on one side (the surface side) at the interior of the member 21. Or, as illustrated by target object cross-section 2-3, the electrically-conductive urethane 22 may be formed at the other side (the reverse surface side) of the interior of the member 21. Moreover, as illustrated by target object cross-section 2-4, the electrically-conductive urethane 22 may be formed at a portion of the interior of the member 21. Further, as illustrated by target object cross-section 2-5, the electrically-conductive urethane 22 may be disposed separately at the outer side of the obverse side of the member 21, or, as illustrated by target object cross-section 2-6, may be disposed at the outer side of the other side (the reverse surface side). In a case in which the electrically-conductive urethane 22 is disposed at the exterior of the member 21, the electrically-conductive urethane 22 and the member 21 may be merely layered, or the electrically-conductive urethane 22 and the member 21 may be made integral by adhesion or the like. Note that, even in a case in which the electrically-conductive urethane 22 is disposed at the exterior of the member 21, the flexibility of the member 21 is not impeded because the electrically-conductive urethane 22 is a urethane member that is electrically conductive.

As illustrated in Fig. 1, the electrically-conductive urethane 22 detects the electrical characteristics of the electrically-conductive urethane 22 (i.e., the volume resistance values that are electrical resistance values) by signals from at least two detection points 75 that are disposed so as to be separated by a distance. The example of Fig. 1 illustrates detection set #1 that detects electrical characteristics (time-series electrical resistance values) from signals from the two detection points 75 that are disposed at diagonal positions on the electrically-conductive urethane 22. Note that the number of and the arrangement of the detection points 75 is not limited to the positions illustrated in Fig. 1. Provided that the positions are positions at which it is possible to detect the electrical characteristics of the electrically-conductive urethane 22, the number thereof may be three or more, and the positions thereof may be any positions. Note that it suffices to connect the electrical characteristic detecting section 76 that detects the electrical characteristics (e.g., volume resistance values that are electrical resistance values) to the detection points 75, and to use the output thereof as the electrical characteristics of the electrically-conductive urethane 22.

In the present embodiment, the electrically-conductive urethane 22 is used as a sensor, and therefore, in a case in which a figure is interposed for example, the strange feeling that is imparted to the figure is extremely small as compared with a conventional sensor. Therefore, the state of the applying side in relation to the figure is not impeded during measurement, and measurement and estimation of the state of the applying side can be carried out simultaneously. This is advantageous as compared with conventional sensors that separately carry out measurement and estimation of the state of the applying side, and the merits are great particularly in estimation in accordance with long-term measurement/evaluation that follows time-series variations.

The estimating section 5 is a functional section that is connected to the target object 2 and that, on the basis of electrical characteristics that vary in accordance with at least one of deformation and alteration of the electrically-conductive urethane 22, estimates the state of the applying side by using the learning model 51. Specifically, time-series input data 4, which expresses magnitudes of electrical resistances (electrical resistance values or the like) at the electrically-conductive urethane 22, is inputted to the estimating section 5. The input data 4 corresponds to state data 3 that expresses a state of the applying side with respect to the target object 2, e.g., a state relating to the posture of the figure that contacts the target object 2, or the behavior of the figure such as movement or the like. For example, at a time of contacting the target object 2, the figure contacts in a predetermined state such as a posture or the like, and, in accordance with this state, a stimulus (at least one of a pressure stimulus and a material stimulus) is applied as a physical amount to the electrically-conductive urethane 22 that structures the target object 2, and the electrical characteristics of the electrically-conductive urethane 22 vary. Accordingly, the electrical characteristics of the electrically-conductive urethane 22, which vary in time series and are shown by the input data 4, correspond to the state of the applying side with respect to the target object 2, i.e., the electrically-conductive urethane 22. Further, the estimating section 5 outputs, as the results of the estimation using the trained learning model 51, output data 6 that expresses the state of the applying side corresponding to the electrical characteristics of the electrically-conductive urethane 22 that vary in time series.

The learning model 51 is a model that has been trained and that derives the output data 6 expressing the state of the applying side, from the electrical resistances (the input data 4) of the electrically-conductive urethane 22 that vary due to the stimulus (pressure stimulus or material stimulus) that is applied as the physical amount. The learning model 51 is, for example, a model that prescribes a trained neural network, and is expressed as a collection of information of the weights (strengths) of the connections between the nodes (neurons) that structure the neural network.

### <Learning Processing>

The learning processing that generates the learning model 51 is described next.

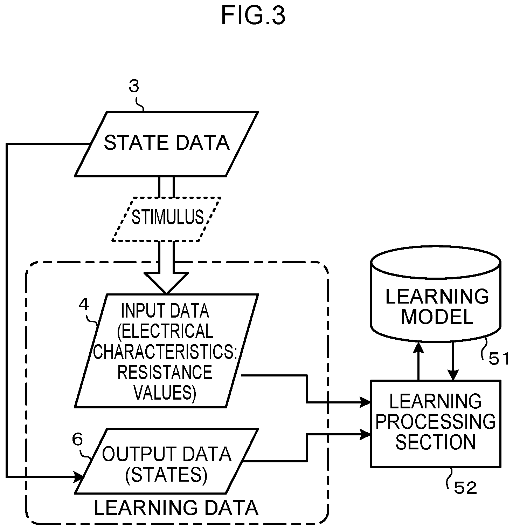

Fig. 3 illustrates the schematic structure of a learning model generating device that generates the learning model 51. The learning model generating device has a learning processing section 52. The learning model generating device can be structured to include a computer having an unillustrated CPU, and is executed as the learning processing section 52 and generates the learning model 51, by learning data collecting processing and learning model generating processing that are executed by the CPU.

### <Learning Data Collecting Processing>

In the learning data collecting processing, the learning processing section 52 collects, as learning data, a large amount of the input data 4 that is obtained by measuring in time series the electrical characteristics (e.g., the electrical resistance values) at the electrically-conductive urethane 22 and whose labels are the state data 3 that express states of the applying side. Accordingly, the learning data includes a large number of sets of the input data 4 expressing the electrical characteristics, and the state data 3 expressing states of the applying side that correspond to those input data 4.

Specifically, in the learning data collecting processing, electrical characteristics (e.g., electrical resistance values) that vary due to a stimulus (a pressure stimulus or material stimulus) corresponding to the state of the applying side at the time when a state at the target object 2 (i.e., a state of the applying side with respect to the electrically-conductive urethane 22) is formed, are acquired in time series. Next, the state data 3 is applied as a label to the electrical characteristics that were acquired in time series (the input data 4), and the processings are repeated until the sets of the state data 3 and the input data 4 reach a predetermined number that has been set in advance or a predetermined time that has been set in advance. These sets of the state data 3 that express states of the applying side, and the time-series electrical characteristics of the electrically-conductive urethane 22 that are acquired per state of the applying side (the input data 4), are used as the learning data. Note that the state data 3 of the learning data are stored in an unillustrated memory so as to be treated as the output data 6 that express states of the applying side at which the estimation results are the correct answers in the learning processing that is described later.

Note that, in the learning data, time-series information may be set in correspondence by applying information expressing the time of measurement to each of the electrical resistance values of the electrically-conductive urethane 22 (the input data 4). In this case, the time-series information may be set in correspondence by applying information expressing the time of measurement to sets of time-series electrical resistance values at the electrically-conductive urethane 22, in a time period that is set as the state of the applying side.

An example of the above-described learning data is shown in a table next. Table 1 is an example of data sets in which time-series electrical resistance value data (r) and state data (R) expressing states of the applying side are set in correspondence with one another as learning data relating to the state of the applying side with respect to the electrically-conductive urethane 22.

**[Table 1]**

| time-series electrical resistance value data | state |
|---|---|
| r11, r12, r13, ..., r1n | R1 |
| r21, r22, r23, ..., r2n | R2 |
| ... | ... |
| rk1, rk2, rk3, ..., rkn | Rk |
| ... | ... |

Note that the electrical characteristics detected at the electrically-conductive urethane 22 (the time characteristics in accordance with the time-series electrical resistance value data) can be considered as distinctive patterns relating to the states of the applying side with respect to the electrically-conductive urethane 22. Namely, different stimuli are applied to the electrically-conductive urethane 22 in time series, depending on the state of the applying side with respect to the electrically-conductive urethane 22. Accordingly, it is thought that time-series electrical characteristics within a predetermined time period appear as distinctive electrical characteristics with respect to the state of the applying side. Accordingly, patterns (e.g., the shape of the distribution of the time-series electrical resistance values in the electrical characteristics), which are shown in the electrical characteristics detected at the electrically-conductive urethane 22 (the time characteristics in accordance with time-series electrical resistance value data), correspond to the states of the applying side, and function effectively in the learning processing that is described later.

### <Learning Model Generating Processing>

Learning model generating processing is described next. The learning model generating device illustrated in Fig. 3 generates the learning model 51 by using the above-described learning data, by learning model generating processing at the learning processing section 52.

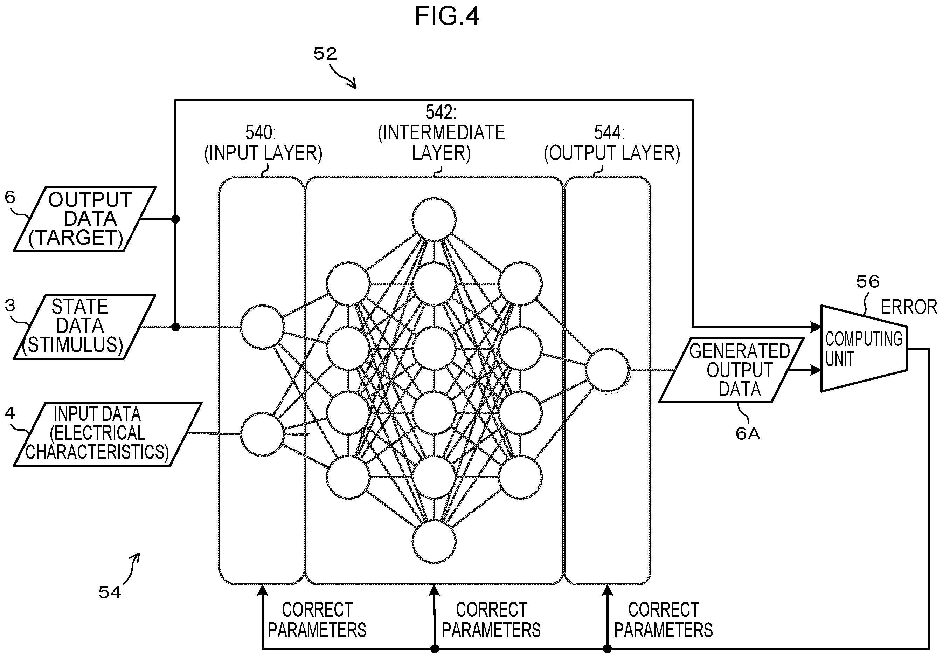

Fig. 4 is a drawing illustrating functional structures of the learning processing section 52, i.e., functional structures of an unillustrated CPU in relation to the learning model generating processing executed at the learning processing section 52. The unillustrated CPU of the learning processing section 52 operates as functional sections that are a generating unit 54 and a computing unit 56. The generating unit 54 has the function of generating output while taking into consideration the before-after relationships of the electrical resistance values acquired in time series that are the inputs.

The learning processing section 52 holds, as the learning data and in an unillustrated memory, a large number of sets of the above-described input data 4 (e.g., electrical resistance values), and the output data 6 that are the state data 3 expressing states of the applying side that applied a stimulus to the electrically-conductive urethane 22.

The generating unit 54 includes an input layer 540, an intermediate layer 542 and an output layer 544, and structures a known neural network (NN). Because neural networks themselves are known technology, detailed description thereof is omitted. However, the intermediate layer 542 includes a large number of node groups (neuron groups) having inter-node connections and feedback connections. Data from the input layer 540 is inputted to the intermediate layer 542, and the data that is the results of calculation of the intermediate layer 542 is outputted to the output layer 544.

The generating unit 54 is a neural network that generates generated output data 6A that serves as data expressing the state of the applying side or data close to the state of the applying side, from the inputted input data 4 (electrical resistance values). The generated output data 6A is data in which the state of the applying side that applied a stimulus to the electrically-conductive urethane 22 is estimated from the input data 4. The generating unit 54 generates the generated output data that expresses a state close to the state of the applying side, from the input data 4 that was inputted in time series. By learning by using a large number of the input data 4, the generating unit 54 can generate the generated output data 6A that is close to the state of the applying side such as a figure or the like that applied a stimulus to the target object 2, i.e., the electrically-conductive urethane 22. In another aspect, the electrical characteristics that are the input data 4 inputted in time series can be considered as patterns, and, by learning these patterns, the generating unit 54 can generate the generated output data 6A that is close to the state of the applying side such as a figure or the like that applied a stimulus to the target object 2, i.e., the electrically-conductive urethane 22.

The computing unit 56 is a computing unit that compares the generated output data 6A and the output data 6 of the learning data, and computes the error of these results of comparison. The learning processing section 52 inputs the generated output data 6A and the output data 6 of the learning data to the computing unit 56. In accordance therewith, the computing unit 56 computes the error between the generated output data 6A and the output data 6 of the learning data, and outputs a signal expressing these computational results.

On the basis of the error computed at the computing unit 56, the learning processing section 52 carries out training of the generating unit 54, which is the tuning of the weighting parameters of the connections between the nodes. Specifically, the learning processing section 52 feeds-back, to the generating unit 54, the weighting parameters of the connections between the nodes of the input layer 540 and the intermediate layer 542, the weighting parameters of the connections between the nodes within the intermediate layer 542, and the weighting parameters of the connections between the nodes of the intermediate layer 542 and the output layer 544, respectively at the generating unit 54 by using, for example, a method such as the gradient descent method or backpropagation or the like. Namely, the learning processing section 52 optimizes all of the connections between the nodes such that the errors between the generated output data 6A and the output data 6 of the learning data are minimized, with the target thereof being the output data 6 of the learning data.

Note that the generating unit 54 may use a regression neural network having the function of generating the outputs while taking the before-after relationships of the time-series inputs into consideration, or may use another method.

The learning processing section 52 generates the learning model 51 by learning model generating processing by using the above-described learning data. The learning model 51 is expressed as a collection of information of weighting parameters (weights or strengths) of the connections between the nodes, which are the results of learning, and is stored in an unillustrated memory.

Specifically, the learning processing section 52 executes the learning model generating processing in accordance with the following processes. In a first learning processing, the learning processing section 52 acquires the input data 4 (electrical characteristics) that are the learning data that are results of time-series measurement, and whose labels are information expressing the state of the applying side. In a second learning processing, the learning processing section 52 generates the learning model 51 by using the learning data that are the results of time-series measurement. Namely, the learning processing section 52 obtains the collection of information of the weighting parameters (weights or strengths) of the connections between the nodes that are the results of learning that have been learned by using a large number of learning data as described above. Then, in a third learning processing, the learning processing section 52 stores, as the learning model 51, data that is expressed as a collection of information of the weighting parameters (weights or strengths) of the connections between the nodes that are the results of learning.

Then, the above-described estimating device 1 uses, as the learning model 51, the trained generating unit 54 (i.e., data that is expressed as a collection of information of the weighting parameters of the connections between the nodes that are the results of learning). If the learning model 51 that has been sufficiently trained is used, it is possible to identify the state of the applying side from the target object 2, i.e., the time-series electrical characteristics of the electrically-conductive urethane 22 (e.g., the characteristics of the electrical resistance values that vary in time series).

### <PRC>

By the way, as described above, at the electrically-conductive urethane 22, the electrical paths cooperate in a complex manner, and the electrically-conductive urethane 22 exhibits behavior corresponding to variations (deformation) such as extension/contraction, expansion/contraction, temporary cutting-off, new connections and the like of the electrical paths, and variations (alteration) in the properties of the material. As a result, the electrically-conductive urethane 22 exhibits the behavior of having electrical characteristics that differ in accordance with the applied stimulus (e.g., pressure stimulus). With regard to this point, the electrically-conductive urethane 22 can be treated as a reservoir that accumulates data relating to deformation of the electrically-conductive urethane 22. Namely, the estimating device 1 can apply the electrically-conductive urethane 22 to a network model (hereinafter called a PRCN) that is called physical reservoir computing (PRC). Because PRCs and PRCNs themselves are known techniques, detailed description thereof is omitted. However, PRCs and PRCNs are suitable for estimating information relating to deformation and alteration of the electrically-conductive urethane 22. Note that there are cases in which the reservoir is called a reservoir or a reservoir.

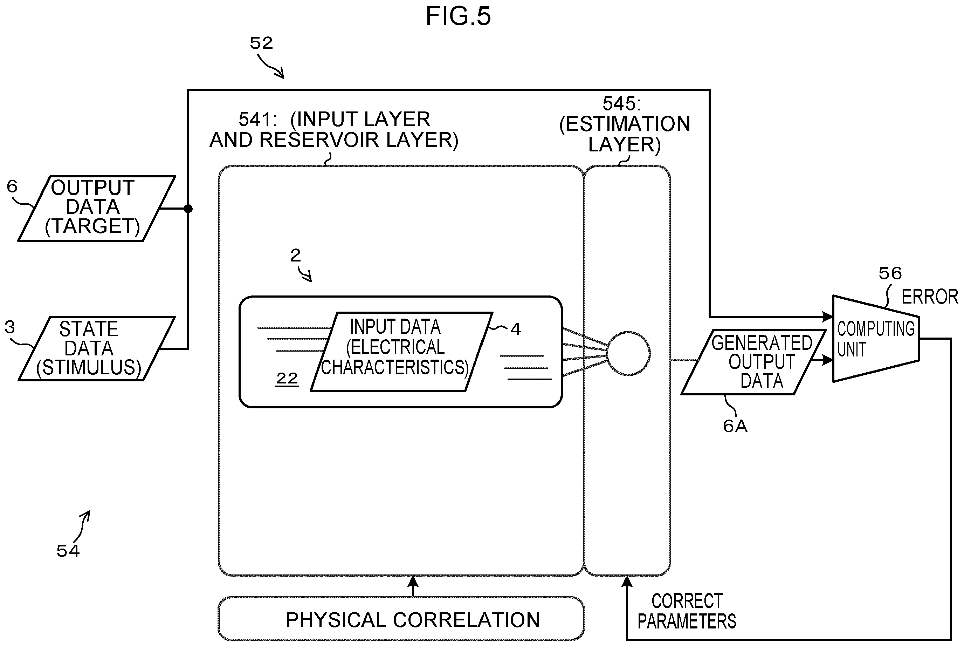

Fig. 5 illustrates an example of functional structures of the learning processing section 52 that utilizes a PRCN. The learning processing section 52 that utilizes a PRCN includes an input/reservoir layer 541 and an estimation layer 545. The input/reservoir layer 541 corresponds to the electrically-conductive urethane 22 that is included in the target object 2. Namely, the learning processing section 52 that utilizes a PRCN carries out learning by treating the target object 2 that includes the electrically-conductive urethane 22 as a reservoir that accumulates data relating to deformation and alteration of the target object 2 that includes the electrically-conductive urethane 22. The electrically-conductive urethane 22 has electrical characteristics (electrical resistance values) corresponding to diverse stimuli respectively, and functions as an input layer that inputs the electrical resistance values, and further functions as a reservoir layer that accumulates data relating to deformation and alteration of the electrically-conductive urethane 22. Because the electrically-conductive urethane 22 outputs electrical characteristics (the input data 4) that differ in accordance with the stimulus applied due to the state of the applying side that is a figure or the like, at the estimation layer 545, it is possible to estimate the state of the unknown applying side from the electrical resistance values of the electrically-conductive urethane 22 to which the stimulus was applied. Accordingly, in the learning processing at the learning processing section 52 that utilizes a PRCN, it suffices to learn the estimation layer 545.

### <Structure of Estimating Device>

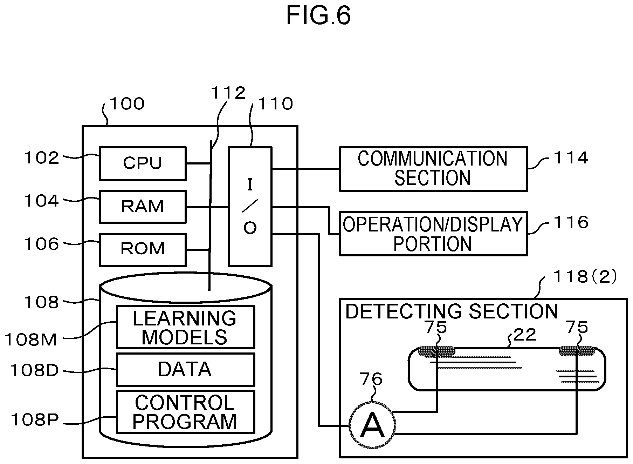

Next, an example of specific structures of the above-described estimating device 1 is further described. Fig. 6 illustrates an example of the electrical structures of the estimating device 1. The estimating device 1 illustrated in Fig. 6 is structured to include a computer serving as an executing device that executes processings that realize the above-described various functions. The above-described estimating device 1 can be realized by causing a computer to execute a program that expresses the above-described respective functions.

The computer that functions as the estimating device 1 has a computer main body 100. The computer main body 100 has a CPU 102, a RAM 104 such as a volatile memory or the like, a ROM 106, an auxiliary storage device 108 such as a hard disk device (HDD) or the like, and an input/output interface (I/O) 110. These CPU 102, RAM 104, ROM 106, auxiliary storage device 108 and input/output I/O 110 are structures that are connected via bus 112 so as to be able to transfer data and commands to and from one another. Further, a communication section 114 for communicating with external devices, an operation/display portion 116 such as a display and a keyboard or the like, and a detecting section 118 are connected to the input/output I/O 110. The detecting section 118 functions to acquire the input data 4 (the electrical characteristics that are the time-series electrical resistance values or the like) from the target object 2 that includes the electrically-conductive urethane 22. Namely, the detecting section 118 includes the target object 2 at which the electrically-conductive urethane 22 is disposed, and can acquire the input data 4 from the electrical characteristic detecting section 76 that is connected to the detection points 75 at the electrically-conductive urethane 22. Note that the detecting section 118 may be connected via the communication section 114.

A control program 108P, which is for causing the computer main body 100 to function as the estimating device 1 that serves as an example of the estimating device of the present disclosure, is stored in the auxiliary storage device 108. The CPU 102 reads-out the control program 108P from the auxiliary storage device 108, and expands the control program 108P in the RAM 104, and executes processings. Due thereto, the computer main body 100 that executes the control program 108P operates as the estimating device 1.

Note that learning models 108M that include the learning model 51, and data 108D that includes various data, are stored in the auxiliary storage device 108. The control program 108P may be provided by a recording medium such as a CD-ROM or the like.

### <Estimating Processing>

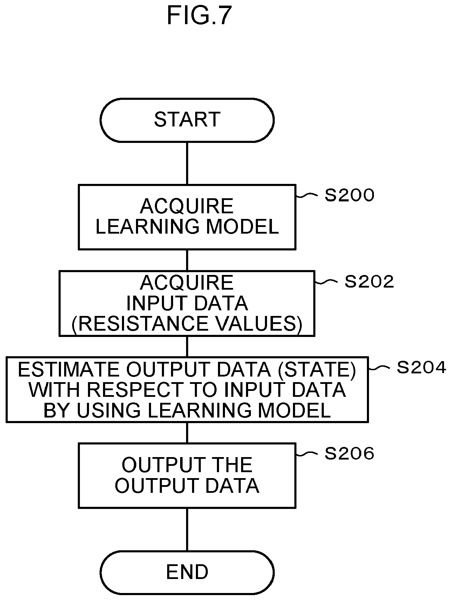

Next, the estimating processing at the estimating device 1 that is realized by a computer is further described. Fig. 7 illustrates an example of the flow of the estimating processing in accordance with the control program 108P executed at the computer main body 100. The estimating processing illustrated in Fig. 7 is executed by the CPU 102 when the power of the computer main body 100 is turned on. The CPU 102 reads-out the control program 108P from the auxiliary storage device 108, and expands the control program 108P in the RAM 104, and executes processings.

First, the CPU 102 acquires the learning model 51 by reading-out the learning model 51 from the learning models 108M of the auxiliary storage device 108 and expanding the learning model 51 in the RAM 104 (step S200). Specifically, the learning model 51, in which the connections between the nodes in accordance with weighting parameters are realized, is constructed due to the CPU 102 expanding, in the RAM 104, the network model (refer to Fig. 4 and Fig. 5) that is formed from the connections between the nodes in accordance with the weighting parameters expressed as the learning model 51.

Next, the CPU 102 acquires, in time series and via the detecting section 118, the unknown input data 4 (electrical characteristics) that are subjects in estimating the state of the applying side that is due to the stimulus applied to the electrically-conductive urethane 22 (step S202). Next, by using the learning model 51, the CPU 102 estimates the output data 6 (the state of the unknown applying side) that corresponds to the acquired input data 4 (step S204). Then, the CPU 102 outputs the output data 6 (the state of the applying side) that is the results of estimation via the communication section 114 (step S206), and ends the present processing routine.

In this way, in accordance with the estimating device 1, the state of the unknown applying side can be estimated from electrical resistance values of the electrically-conductive urethane 22. Specifically, at the estimating device 1, the state of the applying side such as a figure or the like can be estimated from the input data 4 (electrical characteristics) that vary in accordance with the stimulus applied to the electrically-conductive urethane 22 due to the state of the applying side. Namely, the state of the applying side such as a figure or the like can be estimated without using a special device or a large device and without directly measuring deformation of a flexible member.

By the way, at a flexible material at which at least a portion thereof can deform such as bend or the like, the softness and the hardness (flexibility / repulsion force / restoring force) deteriorate due to the number of times of deformation, changes over time, and the like. Note that the number of times of deformation may be the deformation frequency, or the number of times of deformation and the deformation frequency may be combined. Deformation frequency may be used so as to have the same meaning as the number of times of deformation, or the number of times of deformation per unit time period may be used as the deformation frequency. Hereinafter, description will be given by collectively calling the number of times of deformation, and the number of times of deformation per unit time, the deformation frequency. At the above-described electrically-conductive urethane 22, features relating to the state of the applying side are expressed as electrical characteristics in the time-series electrical characteristics. Accordingly, features, which express the state of deterioration of the flexibility that arises in accordance with the deformation frequency or changes over time or the like, are expressed by patterns (e.g., the shape of the distribution of the time-series electrical resistance values in the electrical characteristics) that are shown in the electrical characteristics detected at the electrically-conductive urethane 22 (the time characteristics in accordance with the time-series electrical resistance value data). Thus, in the present embodiment, deterioration of a flexible material that is deformable is estimated by the estimating device 1 that includes the above-described electrically-conductive urethane 22.

Note that, hereinafter, in order to simplify explanation, description is given of an example in which a flexible material that is not electrically-conductive and is deformable is included in the target object 2 as the member 21, and the electrically-conductive urethane 22 is disposed on the reverse surface side of the member 21 (target object cross-section 2-5 in Fig. 2). Further, in the following explanation, description is given of a case of deterioration in which the softness (flexibility) gradually becomes harder. However, the technique of the present disclosure can, of course, be applied similarly to cases of deterioration in which the softness gradually becomes softer. Namely, the phenomenon in which a deformable, flexible material, e.g., urethane, becomes harder due to air bubbles within a foamed body thereof being crushed and not returning to their original forms, is an example of deterioration in which the softness (flexibility) gradually becomes harder. On the other hand, the technique of the present disclosure is applicable also to states in which, at a flexible material that can deform such as urethane or the like, the hardness decreases for example (states in which the skeleton that structures the flexible material gradually becomes softer and the repulsion force decreases).

"Deterioration" and "deteriorated state" in the present embodiment are a concept including states in which softness has changed from a predetermined time, e.g., from the initial formation of the flexible material, in relation to deformation of the flexible material at the time when a pressure stimulus is applied thereto, and restoration from the deformation. Specifically, for example, from the standpoint of the structure and the shape of the flexible material, states in which the restoring force, by which the post-deformation structure and shape return to the pre-deformation structure and shape, has changed (increased or decreased) from that of the time when the flexible material was originally manufactured, and states in which the pressure that can be applied at the time of deformation has changed (increased or decreased) from the pressure of the time when the flexible material was originally manufactured, are included.

### <Deteriorated State Estimating Device>

An example of a deteriorated state estimating device, which estimates the deteriorated state of the target object 2 that includes the electrically-conductive urethane 22, is described next.

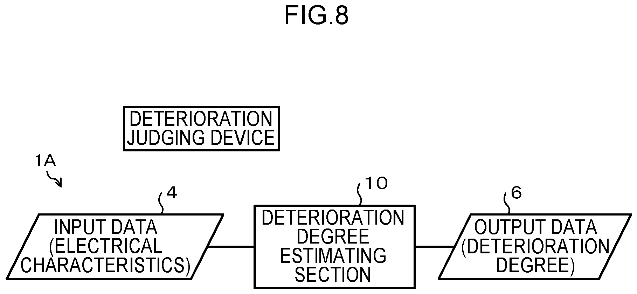

An example of the structure of an estimating device 1A that serves as the deteriorated state estimating device relating to the present embodiment is illustrated in Fig. 8. The estimating device 1A illustrated in Fig. 8 has a deteriorated state estimating section 10 instead of the estimating section 5 illustrated in Fig. 1.

By using the trained learning model 51, the estimating processing at the deteriorated state estimating device 1A estimates and outputs the deteriorated state of an unknown product (object of estimation). The learning model 51 is trained by learning data that includes electrical characteristics of the electrically-conductive urethane 22 and deteriorated states of the target object 2 that includes the electrically-conductive urethane 22.

The learning processing that generates the learning model 51 relating to the present embodiment is described next. Learning is carried out by using, as learning data, electrical characteristics of the electrically-conductive urethane 22 (the input data 4) whose labels are deteriorated state information (the state data 3) expressing deteriorated states of the target object 2.

First, the learning data that is used in the learning processing is described.

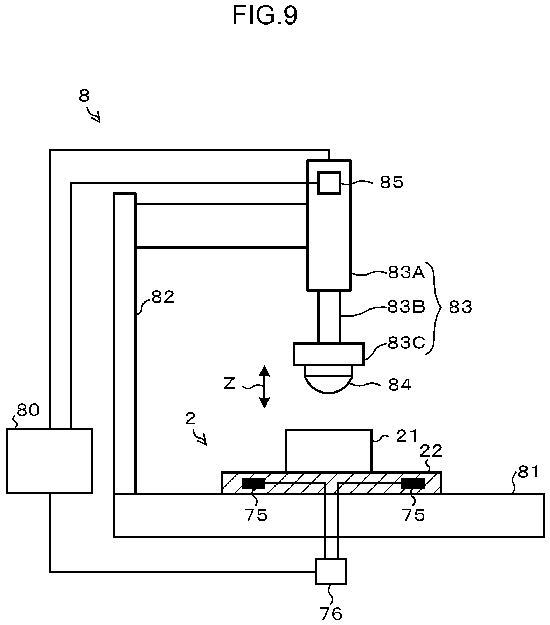

Fig. 9 illustrates an example of a measuring device 8 that measures a physical amount at the target object 2. The measuring device 8 functions also as a durability tester of the target object 2 by repeatedly applying a pressure stimulus (details described later).

At the measuring device 8, a pressure applying section 83 for applying a pressure stimulus to the target object 2 is mounted to a fixed portion 82 that is fixed to a base 81. The pressure applying section 83 has a pressure applying main body 83A, an arm 83B that can extend and retract with respect to the pressure applying main body 83A, and a distal end portion 83C mounted to the distal end of the arm 83B. The pressure applying main body 83A is fixed to the fixed portion 82. The arm 83B is extended and retracted in accordance with an input signal, and the distal end portion 83C is moved in a predetermined direction (the arrow Z direction and the direction opposite thereto). Due thereto, a pushing member 84 can contact the target object 2 that is set on the base 81 and can push the target object 2 after contacting it, and can move away from the target object 2.

At the target object 2, the electrically-conductive urethane 22 is disposed on the base 81, and the member 21 that is flexible such as urethane or the like is disposed on the electrically-conductive urethane 22. The pushing member 84 that is a predetermined shape is mounted to the distal end portion 83C of the pressure applying section 83. The target object 2 is disposed such that the pushing member 84, which is mounted to the distal end portion 83C of the pressure applying section 83, can at least contact the target object 2. Note that, in the present embodiment, the pushing member 84 whose distal end is shaped as a curved surface (e.g., a portion of a sphere) is used as an example of the pushing member 84 of a predetermined shape. The pushing member 84 is a member that applies a pressure stimulus by a predetermined pressure to the target object 2. Note that, as the cross-sectional shape of the pushing member 84, the shape may be any of quadrangular, trapezoidal, circular, oval and polygonal, or may be another shape.

The pressure applying section 83 operates such that, due to the arm 83B extending, the distal end portion 83C pushes the pushing member 84 against the target object 2.

The pressure applying main body 83A has a force sensor 85 having the function of detecting forces in six axial directions for example. The force sensor 85 has the function of detecting the pushing state of the pushing member 84 with respect to the target object 2, and the function of detecting the pressure applied to the target object 2, from the detected forces. Due to this force sensor 85, it is possible to detect, in time series, physical amounts in states in which the pushing member 84 is pushing the target object 2, and it is possible to detect, in time series, pressures applied to the target object 2. Note that the force sensor 85 can be omitted in cases in which only the deteriorated state is tested.

The measuring device 8 has a controller 80 that is connected to the pressure applying section 83 and the force sensor 85. The controller 80 has an unillustrated CPU, carries out control of the pressure applying section 83 by the unillustrated CPU, applies a pressure stimulus to the target object 2, and acquires and stores the time-series electrical characteristics that are due to the pressure stimulus applied to the target object 2.

In the present embodiment, the controller 80 carries out control of the pressure applying section 83 so as to carry out reciprocal movement that extends and retracts the arm 83B, and apply and cancel a pressure stimulus with respect to the target object 2. Further, synchronously with the application and canceling of the pressure stimulus with respect to the target object 2, the controller 80 acquires electrical characteristics of the electrically-conductive urethane 22. Accordingly, the measuring device 8 can acquire, in time-series, electrical characteristics relating to deformation of the target object 2 to which deformation is applied intermittently (e.g., periodically), as one learning data.

The deteriorated state of the target object 2 is described next.

At the target object 2, the softness deteriorates in accordance with at least one of the frequency of deformation and changes over time. For example, as the frequency of deformation increases, the softness deteriorates, and, as the elapsed time, such as the time that the target object 2 is left alone or the like, increases, the softness deteriorates. Further, there are also cases in which, as the frequency of deformation and the elapsed time respectively increase, the softness deteriorates. With regard to the deteriorated state that expresses the deterioration of the target object, in relation to geometric aspects such as the structure and the shape and the like of the target object 2, the time that is from a pressure stimulus being applied and the target object 2 deforming until the target object 2 is restored to the structure and the like of before the application of the pressure stimulus, and the extent of the structural difference between the original structure or the like and the structure or the like after restoration, are considered. Further, in relation to mechanical aspects that arise at the target object 2, the extent to which the repulsion force of the target object 2 at the time when a pressure stimulus is applied and the target object 2 deforms, and the restoring force of the target object 2 at the time when the pressure stimulus is cancelled and the deformation is restored, differ is considered. However, at the target object 2 that is flexible, because both the geometric aspect and the mechanical aspect are closely related, in the present embodiment, no distinction is made therebetween, and both are treated as the deteriorated state of the target object 2.

Note that, with regard to the frequency of the deformation, plural samples (the target object 2) of the same size were prepared, and deformation of respectively different numbers of times were applied to the respective materials in the same environment and within a predetermined time period, and when the deformed states were measured, it was confirmed that, the greater the number of times of deformation, i.e., the greater the deformation frequency within the predetermined time period, the greater the extent of the deterioration. Further, with regard to the elapsed time, samples (the target object 2) were prepared, and when the deformation states were measured each predetermined time in the same environment, it was confirmed that, the longer the time that had elapsed, i.e., the longer the elapsed time, the greater the extent of the deterioration.

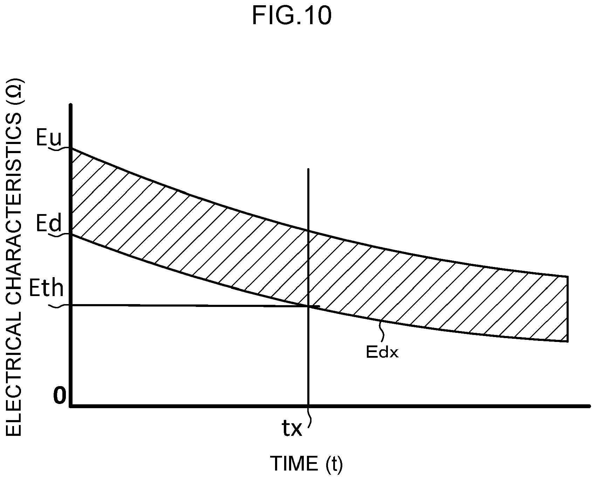

Fig. 10 illustrates, as a schematic drawing, an example of the results of carrying out a durability test on the target object 2 by using the above-described measuring device 8. Fig. 10 illustrates, as an example, the concept of the electrical characteristics (change characteristics of the electrical resistance values) that vary in time series in a case in which the application and canceling of a pressure stimulus with respect to the target object 2 were repeated continuously.

As illustrated in Fig. 10, in the initial stage of measurement, the electrical characteristics of the target object 2 fluctuate between electrical resistance value Ed of the time of application of the pressure stimulus and electrical resistance value Eu of the time of cancelation and restoration. Further, the electrical characteristics of the target object 2 exhibit the tendency that, as the number of times of repetition increases (the measurement time t becomes longer), the electrical resistance value gradually decreases from the initial stage of measurement. Thus, in the present embodiment, the tendency for the electrical resistance value to decrease is quantified and is used as the degree of deterioration. Namely, the degree of deterioration expresses the extent of this tendency for the electrical resistance value to decrease. The degree of deterioration can be set in accordance with features that are included in the electrical characteristics.

With regard to a first feature, the deteriorated state of the target object 2 is expressed by the resistance values that gradually decrease in the electrical characteristics of the target object 2 (Fig. 10). For example, the characteristics relating to the electrical resistance values at the time of application of the pressure stimulus are curve Edx. Using the electrical resistance values in the curve Edx as base resistance values, these base resistance values are used as the degree of deterioration. Note that the degree of deterioration that applies the first feature may use the base resistance values as is. Or, the difference from or the ratio with respect to the electrical resistance values in the initial stage of measurement of the target object 2 or in the initial stage of formation of the target object 2 may be used as the degree of deterioration. Further, the degree of deterioration of the target object 2 may be set in correspondence with a message that is intuitive to users. For example, threshold value Eth that is an electrical resistance value for judging the deteriorated state may be set in advance, and a case in which the deterioration degree is less than the threshold value Eth may be set as an undeteriorated state, and a case in which the deterioration degree is greater than or equal to the threshold value Eth may be set as a deteriorated state. The threshold value Eth may be determined in advance by testing or the like in accordance with stipulations in accordance with the geometrical type and the mechanical type separately at the target object 2, such as the shape in the initial stage of measurement of the target object 2 and the softness in the initial stage of measurement, or the like. Note that, although the states are set above by using the threshold value Eth as the boundary, the threshold value is not limited to one value, and plural threshold values may be set, and the deteriorated states may be set in a stepwise manner. Note that, with regard to the degree of deterioration, the amount of change, which is expressed by the value of the present time with respect to the base resistance value value in the initial stage or the electrical resistance, may be used as a deterioration index for judging deterioration.

A second feature is expressed in the electrical characteristics of one cycle of application and cancellation of a pressure stimulus, or in the electrical characteristics of a predetermined cycle. Specifically, the deteriorated state of the target object 2 is expressed by the change in the electrical resistance values in the electrical characteristics of the application and cancellation of a pressure stimulus.

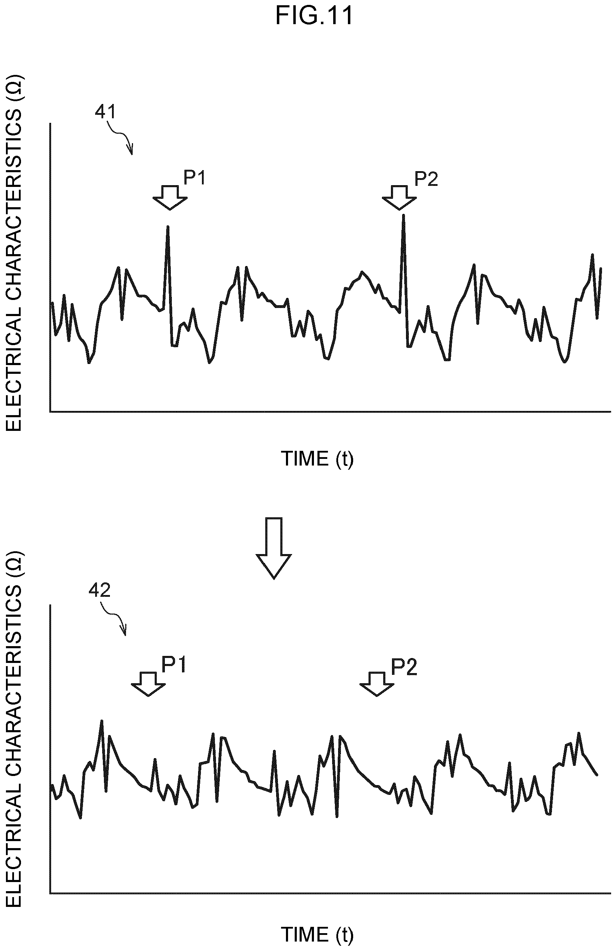

Fig. 11 illustrates an example of the electrical characteristics of the target object 2 in accordance with the above-described test results. In Fig. 11, an example of the electrical characteristics of the target object 2 at the time when application and cancellation of a pressure stimulus are repeated a predetermined number of times in the initial stage of measurement, is illustrated as electrical characteristics 41. Further, repetition of application and cancelation of a pressure stimulus is continuously carried out successively from the initial stage of measurement, and the electrical characteristics of the target object 2 at an elapsed time, which is after the application and cancellation of a predetermined pressure stimulus (an increase of the frequency of deformation) are carried out, are shown by electrical characteristics 42. In Fig. 11, the times when pressure stimuli of two times are applied in the initial stage of measurement and at the elapsed time, in the same cycle, are illustrated as P1 and P2. As illustrated in Fig. 11, the electrical characteristics of the target object 2 are characteristics that differ in the initial stage of measurement and at the elapsed time. Note that, in Fig. 11, an elapsed time in a case in which the frequency of a predetermined deformation is increased is used, but the elapsed time may be the time that the target object 2 is left alone without carrying out application and cancellation of a pressure stimulus. Further, application and cancellation of a pressure stimulus may be repeated continuously, or may be repeated intermittently and the frequency of the deformation increased continuously or intermittently, and the elapsed time may be after a predetermined time has elapsed after this increasing.

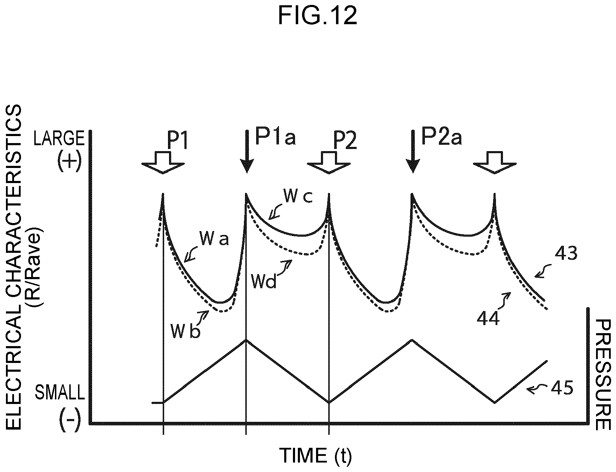

Fig. 12 is a schematic drawing in which the electrical characteristics of the target object 2 illustrated in Fig. 11 are perceived from the standpoint of changes in electrical resistance values. Fig. 12 illustrates, as time characteristics, the concept of electrical characteristics relating to the ratio between the measured electrical resistance values and the average value of the electrical resistance values. Note that Fig. 12 illustrates electrical characteristics that are measured by using, as the pushing member 84, the pushing member 84 at which the contacting portion is shaped as a flat plate that is substantially planar. The time characteristics in the initial stage of measurement are illustrated by the solid line as characteristics 43, and the time characteristics of the elapsed time are illustrated by the dashed line as characteristics 44. Further, in Fig. 12, the pressure characteristics of the pressure stimulus that is applied to the target object are illustrated as characteristics 45. Note that, in Fig. 12, the times when the pressure stimulus is applied to the target object 2 at maximum values (immediately before the pressure stimulus is cancelled) are indicated by P1a, P2a.

As illustrated in Fig. 12, from the standpoint of changes in the electrical resistance values, the electrical characteristics of the target object 2 are characteristics that differ at the time when the pressure stimulus is applied and the time when the pressure stimulus is cancelled. Specifically, with regard to the tendency of the change (e.g., the rate of change) of the electrical resistance values at the time when the pressure stimulus is applied, the difference between tendency Wa in the initial stage of measurement and tendency Wb at the elapsed time is slight. In contrast, with regard to the tendency of the change (e.g., the rate of change) of the electrical resistance values at the time of cancellation, the difference between the tendency Wc in the initial stage of measurement and the tendency Wd at the elapsed time is large. Further, at the elapsed time, there is the tendency toward becoming larger, as compared with the difference at the time when the pressure stimulus is applied in the initial stage of measurement (the interval between the solid line and the dashed line in Fig. 12 widens).

Accordingly, in the second feature, the change in the electrical resistance values in the electrical characteristics of the application and cancellation of the pressure stimulus are used as the deteriorated state of the target object 2. Specifically, for example, the tendency of the change (e.g., the rate of change) of the electrical resistance values, or the difference in the minimum values of the change in the electrical resistance values, is used as the degree of deterioration that expresses the tendency of the deterioration. Note that, in the same way as the degree of deterioration that uses the first feature, as described above, the degree of deterioration that uses the second feature may be associated with a message that is intuitive to a user, and a threshold value for judging the deteriorated state may be determined in advance, and undeteriorated states and deteriorated states may be set with respect to the threshold value. Further, for the degree of deterioration, the amount of change that is expressed by the current value with respect to the value of the initial stage may be used as a deterioration index for judging deterioration.

As compared with the degree of deterioration that uses the first feature, the degree of deterioration, which uses the second feature, being affected by fluctuations in the absolute values of the electrical characteristics can be suppressed, and the deteriorated state of the target object 2 can be identified.

In a third feature, the deteriorated state of the target object 2 is expressed by changes in the frequency of the electrical characteristics of the target object 2, i.e., changes in the frequency of the time characteristics of the time-series electrical resistance values detected at the target object 2.

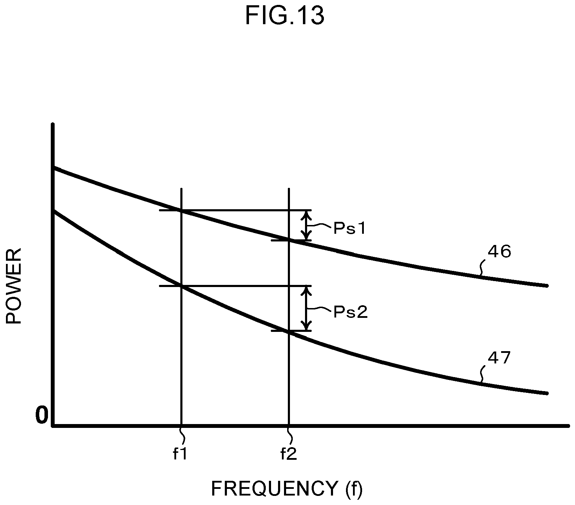

Fig. 13 illustrates, as a schematic diagram, examples of frequency characteristics (power spectra) in the electrical characteristics of the target object 2. In Fig. 13, an example of the concept of the power spectrum of the electrical characteristics 41 (e.g., Fig. 12) of the target object 2 at the time when application and cancellation of a pressure stimulus are repeated a predetermined number of times in the initial stage of measurement, is illustrated as characteristics 46. Further, repetition of application and cancelation of a pressure stimulus is continuously carried out successively from the initial stage of measurement, and the power spectrum of the electrical characteristics 42 (e.g., Fig. 12) of the target object 2 at the elapsed time, which is after application and cancellation of a predetermined pressure stimulus (an increase of the frequency of deformation) are carried out, is illustrated as the characteristics 42.

As illustrated in Fig. 13, as at least one physical amount among the frequency of deformation and the elapsed time increases (e.g., as either the number of times of deformation increases or the elapsed time becomes long), the flexibility of the target object 2 deteriorates, and the phenomenon of the flexibility changing from that theretofore appears in the high-frequency component. Namely, as the frequency of the deformation increases, the high-frequency component changes, and, as the elapsed time, such as the time that the target object 2 is left alone or the like, increases, the high-frequency component changes. Further, there are also cases in which the high-frequency component changes as the frequency of deformation and the elapsed time respectively increase. In the example illustrated in Fig. 13, the high-frequency component gradually decreases due to the lengthening of the elapsed time that accompanies the increase in the deformation frequency, and deterioration in which the flexibility gradually becomes softer progresses. Note that Fig. 13 uses the elapsed time that accompanies an increase in the frequency of a predetermined deformation, but the elapsed time may be the time period over which the target object 2 is left alone. Or, deformation may be repeated continuously, or may be repeated intermittently and the frequency of the deformation increased continuously or intermittently, and the elapsed time may be after a predetermined time has elapsed after this increasing.

Specifically, in the frequency characteristics (the power spectra) of the electrical characteristics, difference Ps in the powers of first frequency f1 and second frequency f2, which is further toward the high frequency side than the first frequency f1, is considered. There is the tendency for difference Ps2 between the powers at the elapsed time (the characteristics 47) to be larger than the difference Ps1 in powers in the initial stage of measurement (the characteristics 46).

Accordingly, in the third feature, the change of the frequency in the electrical characteristics of the target object 2 is used as the deteriorated state of the target object 2. Specifically, for example, the tendency of the change (e.g., the amount of change or the rate of change) of the frequency in the electrical resistance values is used as the degree of deterioration that expresses the tendency of the deterioration. Note that, as described above, the degree of deterioration that uses the third feature may be associated with a message that is intuitive to users, or a threshold value for judging the deteriorated state may be determined in advance, and undeteriorated states and deteriorated states may be set with respect to the threshold value. Further, for the degree of deterioration, the amount of change that is expressed by the current value with respect to the value in the initial stage may be used as a deterioration index for judging deterioration.

As compared with the degree of deterioration that uses the first feature or the second feature, the degree of deterioration, which uses the third feature, being affected by fluctuations in the absolute values of the electrical characteristics and relative fluctuations in the electrical characteristics can be suppressed, and the deteriorated state of the target object 2 can be identified even more precisely.

Deteriorated state information (the state data 3) that expresses the deteriorated state of the target object 2 can be set in accordance with the above-described degree of deterioration. Accordingly, by deriving the above-described feature that is shown in the electrical characteristics of the target object 2, the deteriorated state of the target object 2 with respect to the time-series electrical characteristics relating to deformation of the target object 2 can be set in correspondence as another one learning data.

Accordingly, the set that is formed by the information, which express respectively the time-series electrical characteristics at the target object 2 (i.e., the electrically-conductive urethane 22) and the deteriorated state of the target object 2 with respect to the electrical characteristics, is used as the learning data. An example of the learning data is illustrated as a table next. Table 2 is an example of data sets in which time-series electrical resistance value data (r) and state data (R) expressing deteriorated states are set in correspondence, as learning data relating to the deteriorated state of the target object 2 that includes the electrically-conductive urethane 22.

**[Table 2]**

| time-series electrical resistance value data (r) | state R → degree of deterioration (value E, tendency W, frequency F) |
|---|---|
| r11, r12, r13, ..., r1n | R1(E1,W1,F1) |
| r21, r22, r23, ..., r2n | R2(E2,W2,F2) |
| ... | ... |
| rk1, rk2, rk3, ..., rkn | Rk(Ek,Wk,Fk) |
| ... | ... |

In Table 2, the state data (R) in above-described Table 1 are set in correspondence with deteriorated states and are shown in detail. It suffices for the state data (R) to be set in correspondence with any of the above-described features that are expressed in the electrical characteristics. For example, it suffices to utilize the degree of deterioration (E) that uses the first feature. Examples of the degree of deterioration that uses the first feature are base resistance values, the difference from or the ratio with respect to the initial electrical resistance values, a message expressing the degree of deterioration, and a deterioration index derived from these degrees of deterioration. With the second feature, it suffices to use the change in the electrical resistance values in the electrical characteristics, e.g., the change tendency (W) such as the rate of change of the electrical resistance values or the like, as the degree of deterioration that expresses the tendency of the deterioration. With regard to the degree of deterioration that uses the third feature, it suffices to use the change in the frequency of the electrical characteristics, e.g., the change tendency (F) of the frequency such as the amount of change or the rate of change or the like of the electrical resistance values, as the degree of deterioration that expresses the tendency of the deterioration. Accordingly, because the deteriorated state of the target object 2 is expressed distinctively in the time-series electrical characteristics of the target object 2 (the electrically-conductive urethane 22), this functions effectively in the learning processing.

The learning processing that generates the learning model 51 that relates to the deteriorated state of the target object 2 relating to the present embodiment is described next.

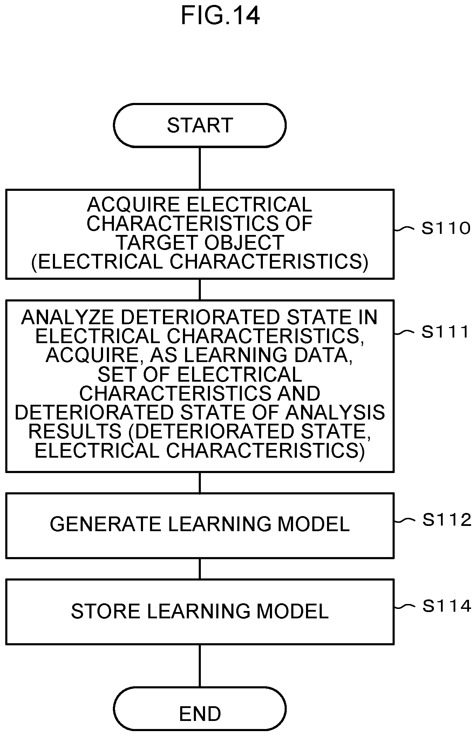

Fig. 14 illustrates an example of the flow of learning processing executed at the learning processing section 52. The learning processing is carried out by the processing of an unillustrated CPU at the above-described learning processing section 52.

In step S110, the electrical characteristics of the target object 2 (the input data 4) are acquired. In next step S111, first, the state data 3 expressing the deteriorated state of the target object 2 is acquired by analyzing the electrical characteristics of the target object 2 (the input data 4) and deriving the degree of deterioration that exhibits a feature described above. In this step S111, the input data 4 that are the electrical characteristics of the target object 2, and the state data 3 that expresses the deteriorated state of the target object 2 that is the results of analysis, are set in correspondence with one another, and the set of the input data 4 (electrical resistances), whose label is the state data 3 (the degree of deterioration), is acquired as learning data. Next, in step S212, the learning model 51 is generated by using the acquired learning data. Namely, the collection of the information of the weighting parameters (weights or strengths) of the connections between the nodes, which are the results of learning that have been learned by using a large number of learning data as described above, are obtained. Then, in step S114, data, which is expressed as the collection of the information of the weighting parameters (weights or strengths) of the connections between the nodes which are the results of learning, is stored as the learning model 51.

The processing of estimating the deteriorated state of the target object 2 by using the learning model 51 relating to the present embodiment is described next.

As described above, at the deteriorated state estimating device 1A, by using the trained learning model 51 that has been generated by the method exemplified above, it is possible to identify the deterioration of the target object 2 from the electrical characteristics at the target object 2, if the learning model 51 that has been sufficiently trained is used. Note that the deteriorated state estimating device 1 of the target object is an example of the estimating section and the estimating device of the present disclosure.

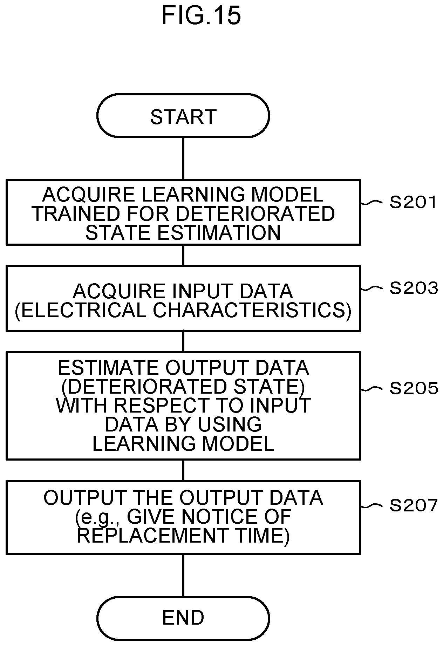

An example of the flow of the processing of estimating the deteriorated state of the target object 2 in accordance with the control program 108P executed at the computer main body 100 is illustrated in Fig. 15. The estimating processing illustrated in Fig. 15 is executed by the CPU 102 when the power of the computer main body 100 is turned on.

First, in step S201, the learning model 51 is acquired and the learning model 51 is constructed due to the learning model 51, which has been trained for the above-described deteriorated state estimation, being read-out from the learning models 108M of the auxiliary storage device 108 and being expanded in the RAM 104.

Next, in step S203, the time-series input data 4 (electrical characteristics) at the unknown target object 2 (object of estimation) is acquired via the detecting section 118.

Next, in step S205, by using the learning model 51 acquired in step S201, the output data 6 (the deteriorated state of the object of estimation), which corresponds to the input data 4 (the electrical characteristics) acquired in step S203, is estimated. Then, in next step S207, the output data 6 (the deteriorated state of the object of estimation) that is the results of estimation is outputted via the communication section 114, and the present processing routine is ended.

Note that, in step S207, it is possible to also output assisting information such as a notification of the time for replacement or the like. For example, the above-described message that is intuitive to a user may be outputted to the communication section 114 or the operation/display portion 116 as the degree of deterioration. Specifically, a message expressing either of an undeteriorated state in a case in which the deterioration degree is less than the threshold value for judging the deteriorated state, or a deteriorated state in which it is preferable to carry out replacement in a case in which the deterioration degree is greater than or equal to the threshold value, may be outputted as information. Due to assisting information being outputted in this way, the user can carry out replacement at an appropriate time, which is when a predetermined state of deterioration is reached.

The estimating processing illustrated in above-described Fig. 15 is an example of the processing that is executed in the estimating method of the present disclosure.

As described above, in accordance with the present disclosure, it is possible to estimate the deteriorated state of an object of estimation whose deteriorated state is unknown, from electrical characteristics at the object of estimation. Namely, it is possible to estimate the deteriorated state of an object of estimation by using electrical characteristics of a time when the target object 2 deforms, without using a special detecting device.

Further, by outputting the results of estimation of the deteriorated state of the object of estimation, the deteriorated state, including the flexibility, at the electrically-conductive urethane 22 that functions as a sensor included in the target object 2 is estimated. Due thereto, even in a case in which the function as a sensor in the initial stage of formation of the target object 2 deteriorates, replacement can be carried out at an appropriate time that is when a predetermined state of deterioration is reached.

### <Modified Example>

The above-described deteriorated state estimating section 10 can be structured per function, in correspondence with the features that are included in the above-described electrical characteristics.

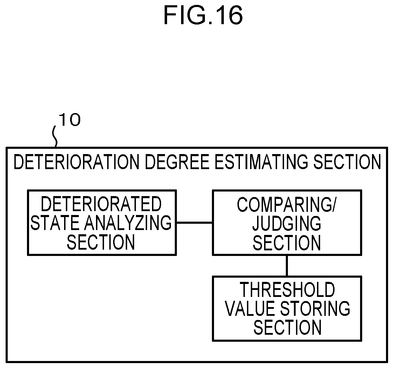

Fig. 16 illustrates a modified example of the structure of the deteriorated state estimating section 10. The deteriorated state estimating section 10 includes a deteriorated state analyzing section, a comparing/judging section, and a threshold value storing section.

The deteriorated state analyzing section is a functional section that analyzes the deteriorated state of the target object 2 that includes the electrically-conductive urethane 2 by using time-series electrical characteristics (the input data 4) that vary in accordance with deformation of the electrically-conductive urethane 22. The deteriorated state analyzing section derives the degree of deterioration that is expressed by a feature that is included in the electrical characteristics as any of the above-described first feature through third feature. The comparing/judging section is a functional section that is connected to the threshold value storing section that stores a threshold value for judging the deteriorated state, and compares the deteriorated state that is the results of analysis and the threshold value for judging the deteriorated state, and outputs the results of comparison as the degree of deterioration. For example, it suffices for the threshold value storing section to store, in the ROM 106 or the auxiliary storage device 108, a threshold value for judging the deteriorated state so as to correspond to messages that are intuitive to users, or the like. Further, it suffices for the comparing/judging section to, by using the threshold value for judging the deteriorated state for example, judge that there is an undeteriorated state in a case in which the derived degree of deterioration is less than the threshold value, and that there is a deteriorated state in a case in which the derived degree of deterioration is greater than or equal to the threshold value. By structuring the deteriorated state estimating section 10 per function in correspondence with the features included in the electrical characteristics in this way, the deteriorated state estimating section 10 can easily be applied to hardware structures such as independent device structures, electrical circuit structures and the like.

The present disclosure describes a case in which an electrically-conductive urethane is used as an example of the flexible member. However, it suffices for the flexible member to be flexible, and the flexible member is, of course, not limited to the above-described electrically-conductive urethane.

Further, the technical scope of the present disclosure is not limited to the scopes described in the above embodiments. Various changes and improvements can be made to the above-described embodiments within a scope that does not depart from the gist, and forms to which such changes and improvements are made also are included in the technical scope of the present disclosure.

Further, the above embodiments describe cases in which the estimating processing and the learning processing are realized by software structures in accordance with processings using flowcharts. However, the present disclosure is not limited to this, and may be a form in which the respective processings are realized by hardware structures for example.

Further, portions of the estimating device, e.g., the neural network of the learning model or the like, may be structured by hardware circuits.

Further, although the above embodiments describe processings that are carried out by the execution of programs stored in the auxiliary storage device, at least some of the processings of the programs may be realized by hardware. Further, the flows of the processings of the programs described in the above embodiments also are examples, and unnecessary steps may be deleted therefrom, new steps may be added thereto, or the order of processings may be changed, within a scope that does not depart from the gist.

Moreover, in order to cause the processings in the above embodiments to be executed by a computer, programs, in which the above-described processings are written in code that can be processed by a computer, may be stored on a storage medium or the like such as an optical disc or the like, and distributed.

The above embodiments describe using a CPU as an example of a generic processor. However, in the above embodiments, processor means a processor in the broad sense and includes generic processors (e.g., CPUs: Central Processing Units, and the like), and dedicated-use processors (e.g., GPUs: Graphics Processing Units, ASICs: Application Specific Integrated Circuits, FPGAs: Field-Programmable Gate Arrays, programmable logic devices, and the like). The operations of this processor may be carried out not only by a single processor, but by plural processors cooperating with one another, and may be carried out by plural processors that exist at locations, which are apart from one another physically, cooperating with one another.

All publications, patent applications, and technical standards mentioned in the present specification are incorporated by reference into the present specification to the same extent as if such individual publication, patent application, or technical standard was specifically and individually indicated to be incorporated by reference.

The above-described embodiments include aspects relating to the technique of the present disclosure.

A first aspect is an estimating device comprising:
a detecting section detecting electrical characteristics between a plurality of predetermined detection points at a flexible material, which is electrically conductive and whose electrical characteristics vary in accordance with deformation, of a target object that has the flexible material; and
an estimating section that inputs time-series electrical characteristics, which were detected by the detecting section, of an object of estimation to a learning model that is trained by using, as learning data, time-series electrical characteristics that vary in accordance with deformation of the flexible material, and deteriorated state information expressing a deteriorated state relating to deformation of the flexible material, such that the time-series electrical characteristics are inputs of the learning model and the learning model outputs the deteriorated state information, and the estimating section estimates deteriorated state information expressing a deteriorated state corresponding to inputted time-series electrical characteristics.

In a second aspect, in the estimating device of the first aspect,
the electrical characteristics are volume resistances,
the target object includes a member that is flexible, and
the deteriorated state is a state expressing a degree of deterioration in which an extent of deterioration increases as at least one physical amount among a number of times of deformation, a deformation frequency and an elapsed time, from an initial state of the target object, increases.

In a third aspect, in the estimating device of the second aspect,
the deteriorated state is a state expressing the degree of deterioration with respect to at least one of electrical characteristics of a time of deformation from a pre-deformation form of the target object, and electrical characteristics of a time of being restored to the pre-deformation form, in time-series electrical characteristics.

In a fourth aspect, in the estimating device of the third aspect,
the deteriorated state is a state expressing the degree of deterioration in which the extent of deterioration increases as a power of a frequency, which is results of analysis when frequency analysis of time-series electrical characteristics is carried out, becomes larger than a power of a frequency of a predetermined time.

In a fifth aspect, in the estimating device of any one of the second aspect through the fourth aspect,
the target object includes a material at which electrical conductivity is imparted to at least a portion of a urethane material of a structure having a skeleton that is at least one of fiber-like and mesh-like, or a structure in which a plurality of minute air bubbles are scattered at an interior thereof.

In a sixth aspect, in the estimating device of any one of the first aspect through the fifth aspect,
the learning model includes a model generated by learning by using a network that uses the flexible material as a reservoir and is in accordance with reservoir computing using the reservoir.

A seventh aspect is an estimating method in which a computer:
detects electrical characteristics between a plurality of predetermined detection points at a flexible material, which is electrically conductive and whose electrical characteristics vary in accordance with deformation, of a target object that has the flexible material; and
inputs detected time-series electrical characteristics of an object of estimation to a learning model that is trained by using, as learning data, time-series electrical characteristics that vary in accordance with deformation of the flexible material, and deteriorated state information expressing a deteriorated state relating to deformation of the flexible material, such that the time-series electrical characteristics are inputs of the learning model and the learning model outputs the deteriorated state information, and the computer estimates deteriorated state information expressing a deteriorated state corresponding to inputted time-series electrical characteristics.

An eighth aspect is an estimating program for causing a computer to execute processings of:
detecting electrical characteristics between a plurality of predetermined detection points at a flexible material, which is electrically conductive and whose electrical characteristics vary in accordance with deformation, of a target object that has the flexible material; and
inputting detected time-series electrical characteristics of an object of estimation to a learning model that is trained by using, as learning data, time-series electrical characteristics that vary in accordance with deformation of the flexible material, and deteriorated state information expressing a deteriorated state relating to deformation of the flexible material, such that the time-series electrical characteristics are inputs of the learning model and the learning model outputs the deteriorated state information, and the computer estimates deteriorated state information expressing a deteriorated state corresponding to inputted time-series electrical characteristics.

A ninth aspect is a learning model generating device comprising:
an acquiring section acquiring electrical characteristics from a detecting section that detects electrical characteristics between a plurality of predetermined detection points at a flexible material, which is electrically conductive and whose electrical characteristics vary in accordance with deformation, of a target object that has the flexible material, and deteriorated state information expressing a deteriorated state of the flexible material; and
a learning model generating section that by using, as learning data, time-series electrical characteristics that vary in accordance with deformation of the flexible material and deteriorated state information expressing a deteriorated state relating to deformation of the flexible material, generates a learning model whose inputs are time-series electrical characteristics of a time when the flexible material was deformed and that outputs deteriorated state information that expresses a deteriorated state relating to deformation of the flexible material.

In accordance with the present disclosure, there is the effect that the deteriorated state of a target object, which has a flexible material that is electrically-conductive, can be estimated by using electrical characteristics of the target object, without using a special detecting device.

## Claims

1. An estimating device, comprising:
a detecting section detecting electrical characteristics between a plurality of predetermined detection points at a flexible material, which is electrically conductive and which has electrical characteristics that vary in accordance with deformation, of a target object that has the flexible material; and
an estimating section that inputs time-series electrical characteristics, which were detected by the detecting section, of an object of estimation to a learning model that is trained by using, as learning data, time-series electrical characteristics that vary in accordance with deformation of the flexible material, and deteriorated state information expressing a deteriorated state relating to deformation of the flexible material, such that the time-series electrical characteristics are inputs of the learning model and the learning model outputs the deteriorated state information, and the estimating section estimates deteriorated state information expressing a deteriorated state corresponding to inputted time-series electrical characteristics.

2. The estimating device of Claim 1, wherein:
the electrical characteristics are volume resistances,
the target object includes a member that is flexible, and
the deteriorated state is a state expressing a degree of deterioration in which an extent of deterioration increases as at least one physical amount among a number of times of deformation, a deformation frequency and an elapsed time, from an initial state of the target object, increases.

3. The estimating device of Claim 2, wherein:
the deteriorated state is a state expressing the degree of deterioration with respect to at least one of electrical characteristics of a time of deformation from a pre-deformation form of the target object, or electrical characteristics of a time of being restored to the pre-deformation form, in time-series electrical characteristics.

4. The estimating device of Claim 2, wherein:
the deteriorated state is a state expressing the degree of deterioration in which the extent of deterioration increases as a power of a frequency, which is results of analysis when frequency analysis of time-series electrical characteristics is carried out, becomes larger than a power of a frequency of a predetermined time.

5. The estimating device of any one of Claim 2 through Claim 4, wherein:
the target object includes a material at which electrical conductivity is imparted to at least a portion of a urethane material of a structure having a skeleton that is at least one of fiber-like or mesh-like, or a structure in which a plurality of minute air bubbles are scattered at an interior thereof.

6. The estimating device of any one of Claim 1 through Claim 5, wherein:
the learning model includes a model generated by learning by using a network that uses the flexible material as a reservoir and is in accordance with reservoir computing using the reservoir.

7. An estimating method in which a computer:
detects electrical characteristics between a plurality of predetermined detection points at a flexible material, which is electrically conductive and which has electrical characteristics that vary in accordance with deformation, of a target object that has the flexible material; and
inputs detected time-series electrical characteristics of an object of estimation to a learning model that is trained by using, as learning data, time-series electrical characteristics that vary in accordance with deformation of the flexible material, and deteriorated state information expressing a deteriorated state relating to deformation of the flexible material, such that the time-series electrical characteristics are inputs of the learning model and the learning model outputs the deteriorated state information, and the computer estimates deteriorated state information expressing a deteriorated state corresponding to inputted time-series electrical characteristics.

8. An estimating program for causing a computer to execute processing of:
detecting electrical characteristics between a plurality of predetermined detection points at a flexible material, which is electrically conductive and which has electrical characteristics that vary in accordance with deformation, of a target object that has the flexible material; and
inputting detected time-series electrical characteristics of an object of estimation to a learning model that is trained by using, as learning data, time-series electrical characteristics that vary in accordance with deformation of the flexible material, and deteriorated state information expressing a deteriorated state relating to deformation of the flexible material, such that the time-series electrical characteristics are inputs of the learning model and the learning model outputs the deteriorated state information, and the computer estimates deteriorated state information expressing a deteriorated state corresponding to inputted time-series electrical characteristics.

9. A learning model generating device, comprising:
an acquiring section acquiring electrical characteristics from a detecting section that detects electrical characteristics between a plurality of predetermined detection points at a flexible material, which is electrically conductive and which has electrical characteristics that vary in accordance with deformation, of a target object that has the flexible material, and deteriorated state information expressing a deteriorated state of the flexible material; and
a learning model generating section that by using, as learning data, time-series electrical characteristics that vary in accordance with deformation of the flexible material and deteriorated state information expressing a deteriorated state relating to deformation of the flexible material, generates a learning model having inputs that are time-series electrical characteristics of a time when the flexible material was deformed and that outputs deteriorated state information that expresses a deteriorated state relating to deformation of the flexible material.
